# EUROPEAN PATENT SPECIFICATION

(11) **EP 4 194 153 B1**
(45) Date of publication and mention of the grant of the patent: **18.03.2026**
(21) Application number: 21852964.2
(22) Date of filing: 19.07.2021
(51) Int. Cl.: G06Q 10/087, B25J 9/16, B65G 1/04

(54) **METHOD, APPARATUS AND SYSTEM FOR CONTROLLING ROBOT, CONTROL DEVICE, AND ROBOT**
VERFAHREN, VORRICHTUNG UND SYSTEM ZUR STEUERUNG EINES ROBOTERS, STEUERUNGSVORRICHTUNG UND ROBOTER
PROCÉDÉ, APPAREIL ET SYSTÈME DE COMMANDE DE ROBOT, DISPOSITIF DE COMMANDE, ET ROBOT

(30) Priority: 07.08.2020 CN 202010791635
(43) Date of publication of application: 14.06.2023
(73) Proprietor: Hai Robotics Co., Ltd., Shenzhen, Guangdong 518000 (CN)
(72) Inventor: XIE, Chao, Shenzhen, Guangdong 518000 (CN); HE, Jiawei, Shenzhen, Guangdong 518000 (CN)
(74) Representative: Gulde & Partner
(86) International application number: PCT/CN2021/107013
(87) International publication number: WO 2022/028237

(56) References cited:
- EP-A2- 2 380 709
- WO-A1-2016/149255
- CN-A- 1 817 757
- CN-A- 110 550 360
- CN-A- 110 677 448
- CN-A- 111 890 369
- JP-A- 2007 283 450
- US-A1- 2020 242 544

## Description

### TECHNICAL FIELD

The present disclosure relates to the intelligent warehousing field, and in particular, to a robot control method, apparatus, and system, a control device, and a robot.

### BACKGROUND

With continuous development of social trade and continuous progress of science and technology, logistics and warehousing technologies are also continuously improving. How to achieve more efficient logistics and warehousing management becomes a hot issue.

In some warehousing and logistics systems, a robot may carry a goods box that stores goods to a temporary storage shelving unit, and a user performs an operation on the goods box on the temporary storage shelving unit to sort and select required goods from the goods box, which can effectively improve goods sorting/selection efficiency. However, because both the user and the robot perform operations near the temporary storage shelving unit, the robot is likely to come into contact with the user, which may lead to personal injury in severe cases and cause poor safety.

WO 2016/149255 A1 discloses short range transmissions used to identify potential interactions between warehouse workers and warehouse robots in automated warehouses. The robot can be equipped with one or more short range transmission tags, such as radio frequency identification (RFID) tags, while the warehouse worker can be equipped with a short-range transmission reader, such as an RFID reader. The robot can detect a warehouse worker that is within range when the RFID tags on the robot are written to by the RFID reader. A central control or interaction server can ensure that warehouse robots and warehouse workers are routed appropriately to avoid incidents.

US 2020/242544 A1 describes a method and system for picking or put-away within a logistics facility. The system includes a central server and at least one mobile manipulation robot. The central server is configured to communicate with the robots to send and receive picking data which includes a unique identification for each item to be picked, a location within the logistics facility of the items to be picked, and a route for the robot to take within the logistics facility. The robots can then autonomously navigate and position themselves within the logistics facility by recognition of landmarks by at least one of a plurality of sensors. The sensors also provide signals related to detection, identification, and location of a item to be picked or put-away, and processors on the robots analyze the sensor information to generate movements of a unique articulated arm and end effector on the robot to pick or put-away the item.

### SUMMARY

Embodiments of the present disclosure provide a robot control method, apparatus, and system, a control device, and a robot, to resolve a technical problem that safety is poor in a goods handling process. The invention is set out in the appended set of claims.

According to a first aspect, an embodiment of the present disclosure provides a robot control method, executable by a control device, the method including:
determining a storage position or a temporary storage shelving unit at which a user performs an operation; and
controlling an operation of a robot according to the storage position or the temporary storage shelving unit at which the user performs the operation, so that the robot avoids performing an operation at the same storage position simultaneously with the user;
wherein the determining a storage position or a temporary storage shelving unit at which a user performs an operation comprises: acquiring detection information sent by a detection device, and determining, according to the detection information, the storage position or the temporary storage shelving unit at which the user performs the operation;
wherein the determining, according to the detection information, the storage position or the temporary storage shelving unit at which the user performs the operation comprises at least one of:
   when it is determined, according to the detection information, that the user appears within a preset range around a temporary storage shelving unit, determining that the user is performing an operation at the temporary storage shelving unit, and when it is determined, according to the detection information, that an arm of the user stretches into a storage position or a distance between the arm of the user and the storage position is less than a preset value, determining that the user is performing an operation at the storage position;
   wherein the controlling an operation of a robot according to the storage position or the temporary storage shelving unit at which the user performs the operation comprises: if it is detected that the user starts to perform an operation at the storage position or the temporary storage shelving unit when the robot is performing an operation at the storage position or the temporary storage shelving unit, controlling the robot to stop performing the operation at the storage position or the temporary storage shelving unit.

In a possible design, the controlling an operation of a robot according to the storage position or the temporary storage shelving unit at which the user performs the operation includes:
determining a locked storage position or a locked shelving unit according to the storage position or the temporary storage shelving unit at which the user performs the operation; and
controlling the operation of the robot according to the locked storage position or the locked shelving unit.

In a possible design, the locked shelving unit includes the temporary storage shelving unit at which the user performs the operation; and
the locked storage position includes the storage position at which the user performs the operation, or the locked storage position includes the storage position at which the user performs the operation and a storage position within a preset range around the storage position at which the user performs the operation.

In a possible design, the storage position within the preset range around the storage position at which the user performs the operation includes at least one of the following: storage positions in a row to which the storage position at which the user performs the operation belongs; storage positions in a column to which the storage position at which the user performs the operation belongs; and a storage position adjacent to the storage position at which the user performs the operation.

In a possible design, the determining a storage position or a temporary storage shelving unit at which a user performs an operation includes:
acquiring detection information sent by a detection device, and determining, according to the detection information, the storage position or the temporary storage shelving unit at which the user performs the operation,
the detection device including at least one of the following: a pressure sensor, a laser radar sensor, an infrared sensor, a visual acquisition device, and a grating sensor.

In a possible design, the determining, according to the detection information, the storage position or the temporary storage shelving unit at which the user performs the operation includes:
when it is determined, according to the detection information, that the user appears within a preset range around a temporary storage shelving unit, determining that the user is performing an operation at the temporary storage shelving unit; and/or
when it is determined, according to the detection information, that an arm of the user stretches into a storage position or a distance between an arm of the user and a storage position is less than a preset value, determining that the user is performing an operation at the storage position.

In a possible design, the determining a storage position or a temporary storage shelving unit at which a user performs an operation includes:
acquiring operation information input by the user, and determining, according to the operation information, the temporary storage shelving unit or the storage position at which the user performs the operation.

In a possible design, the controlling an operation of a robot according to the storage position or the temporary storage shelving unit at which the user performs the operation includes:
if it is detected that the user starts to perform an operation at the storage position or the temporary storage shelving unit when the robot is performing an operation at a storage position or a temporary storage shelving unit, controlling the robot to stop performing the operation at the storage position or the temporary storage shelving unit.
In a possible design, the robot includes a protruding mechanism configured to perform an operation on a to-be-handled object; and
the controlling the robot to stop performing the operation at the storage position or the temporary storage shelving unit includes:
   canceling an operation performed by the robot at a current storage position or temporary storage shelving unit, and if the protruding mechanism has stretched into the storage position or the temporary storage shelving unit, controlling the protruding mechanism to retract or stop.

In a possible design, in a case that the robot is taking out the to-be-handled object, the controlling the protruding mechanism to retract includes:
controlling the protruding mechanism to retract if the protruding mechanism fails to drag the to-be-handled object; and/or
controlling the protruding mechanism to take out the to-be-handled object if the protruding mechanism successfully drags the to-be-handled object.

In a possible design, in a case that the robot is placing the to-be-handled object, the controlling the protruding mechanism to retract includes:
controlling the robot to take back the to-be-handled object if the protruding mechanism does not place the to-be-handled object steadily; and/or
controlling the protruding mechanism to retract if the protruding mechanism has placed the to-be-handled object steadily.

In a possible design, the controlling an operation of a robot according to the storage position or the temporary storage shelving unit at which the user performs the operation includes:
if it is detected that the user starts to perform an operation at a second storage position on the temporary storage shelving unit when the robot is performing an operation at a first storage position on a temporary storage shelving unit, controlling the robot to stop performing the operation at the temporary storage shelving unit after completing the operation at the first storage position.

In a possible design, the controlling an operation of a robot according to the storage position or the temporary storage shelving unit at which the user performs the operation includes:
when the user is performing an operation at the storage position or the temporary storage shelving unit, controlling the robot to perform an operation at another storage position other than the storage position at which the user performs the operation, or controlling the robot to perform an operation at another temporary storage shelving unit other than the temporary storage shelving unit at which the user performs the operation.

In a possible design, the method further includes: determining a priority of the another storage position or temporary storage shelving unit according to a distance between the another storage position or temporary storage shelving unit and the robot, to control the robot to perform an operation according to the priority of the another storage position or the another temporary storage shelving unit.

In a possible design, the controlling an operation of a robot according to the storage position or the temporary storage shelving unit at which the user performs the operation includes:
controlling the robot to wait until the operation performed by the user at the storage position or the temporary storage shelving unit is completed and then perform an operation at the storage position or the temporary storage shelving unit.

According to a second aspect, an embodiment of the present disclosure provides a robot control method, applied to a robot, the method including:
determining a storage position or a temporary storage shelving unit at which a user performs an operation; and
avoiding, according to the storage position or the temporary storage shelving unit at which the user performs the operation, performing an operation at the same storage position simultaneously with the user.

In a possible design, the avoiding, according to the storage position or the temporary storage shelving unit at which the user performs the operation, performing an operation at the same storage position simultaneously with the user includes:
determining a locked storage position or a locked shelving unit according to the storage position or the temporary storage shelving unit at which the user performs the operation; and
avoiding performing an operation at the locked storage position or the locked shelving unit, to avoid performing an operation at the same storage position simultaneously with the user.

In a possible design, the locked shelving unit includes the temporary storage shelving unit at which the user performs the operation; and
the locked storage position includes the storage position at which the user performs the operation, or the locked storage position includes the storage position at which the user performs the operation and a storage position within a preset range around the storage position at which the user performs the operation.

In a possible design, the storage position within the preset range around the storage position at which the user performs the operation includes at least one of the following: storage positions in a row to which the storage position at which the user performs the operation belongs; storage positions in a column to which the storage position at which the user performs the operation belongs; and a storage position adjacent to the storage position at which the user performs the operation.

In a possible design, the determining a storage position or a temporary storage shelving unit at which a user performs an operation includes:
acquiring detection information sent by a detection device, and determining, according to the detection information, the storage position or the temporary storage shelving unit at which the user performs the operation,
the detection device including at least one of the following: a pressure sensor, a laser radar sensor, an infrared sensor, a visual acquisition device, and a grating sensor.

In a possible design, the determining, according to the detection information, the storage position or the temporary storage shelving unit at which the user performs the operation includes:
when it is determined, according to the detection information, that the user appears within a preset range around a temporary storage shelving unit, determining that the user is performing an operation at the temporary storage shelving unit; and/or
when it is determined, according to the detection information, that an arm of the user stretches into a storage position or a distance between an arm of the user and a storage position is less than a preset value, determining that the user is performing an operation at the storage position.

In a possible design, the determining a storage position or a temporary storage shelving unit at which a user performs an operation includes:
receiving operation information that is input by the user and that is sent by a control device, and determining, according to the operation information, the temporary storage shelving unit or the storage position at which the user performs the operation.

In a possible design, the avoiding, according to the storage position or the temporary storage shelving unit at which the user performs the operation, performing an operation at the same storage position simultaneously with the user includes:
in a process of performing an operation at a storage position or a temporary storage shelving unit, if it is detected that the user starts to perform an operation at the storage position or the temporary storage shelving unit, stopping performing the operation at the storage position or the temporary storage shelving unit.

In a possible design, the robot includes a protruding mechanism configured to perform an operation on a to-be-handled object; and
the stopping performing the operation at the storage position or the temporary storage shelving unit includes:
canceling an operation performed at a current storage position or temporary storage shelving unit, and if the protruding mechanism has stretched into the storage position or the temporary storage shelving unit, controlling the protruding mechanism to retract or stop.

In a possible design, in a case that the robot is taking out the to-be-handled object, the controlling the protruding mechanism to retract includes:
controlling the protruding mechanism to retract if the protruding mechanism fails to drag the to-be-handled object; and/or
taking out the to-be-handled object if the protruding mechanism successfully drags the to-be-handled object.

In a possible design, in a case that the robot is placing the to-be-handled object, the controlling the protruding mechanism to retract includes:
taking back the to-be-handled object if the protruding mechanism does not place the to-be-handled object steadily; and/or
controlling the protruding mechanism to retract if the protruding mechanism has placed the to-be-handled object steadily.

In a possible design, the avoiding, according to the storage position or the temporary storage shelving unit at which the user performs the operation, performing an operation at the same storage position simultaneously with the user includes:
if it is detected that the user starts to perform an operation at a second storage position on the temporary storage shelving unit when an operation is being performed at a first storage position on a temporary storage shelving unit, completing the operation at the first storage position and then stopping performing an operation at the temporary storage shelving unit.

In a possible design, the avoiding, according to the storage position or the temporary storage shelving unit at which the user performs the operation, performing an operation at the same storage position simultaneously with the user includes:
when the user is performing an operation at the storage position or the temporary storage shelving unit, performing an operation at another storage position other than the storage position at which the user performs the operation, or performing an operation at another temporary storage shelving unit other than the temporary storage shelving unit at which the user performs the operation.

In a possible design, the method further includes: determining a priority of the another storage position or temporary storage shelving unit according to a distance between the another storage position or temporary storage shelving unit and the robot, to perform an operation according to the priority of the another storage position or the another temporary storage shelving unit.

In a possible design, the avoiding, according to the storage position or the temporary storage shelving unit at which the user performs the operation, performing an operation at the same storage position simultaneously with the user includes:
waiting until the operation performed by the user at the storage position or the temporary storage shelving unit is completed and then performing an operation at the storage position or the temporary storage shelving unit.

According to a third aspect, an embodiment of the present disclosure provides a robot control apparatus, applied to a control device, the apparatus including:
a first determining module, configured to determine a storage position or a temporary storage shelving unit at which a user performs an operation; and
a control module, configured to control an operation of a robot according to the storage position or the temporary storage shelving unit at which the user performs the operation, so that the robot avoids performing an operation at the same storage position simultaneously with the user.

According to a fourth aspect, an embodiment of the present disclosure provides a robot control apparatus, applied to a robot, the apparatus including:
a second determining module, configured to determine a storage position or a temporary storage shelving unit at which a user performs an operation; and
a processing module, configured to avoid, according to the storage position or the temporary storage shelving unit at which the user performs the operation, performing an operation at the same storage position simultaneously with the user.

According to a fifth aspect, an embodiment of the present disclosure provides a control device, including:
at least one processor; and
a memory communicatively connected to the at least one processor,
the memory storing instructions executable by the at least one processor, and the instructions, when being executed by the at least one processor, are configured to perform the method according to any one of the implementations of the first aspect.

According to a sixth aspect, an embodiment of the present disclosure provides a robot, including:
at least one processor; and
a memory communicatively connected to the at least one processor,
the memory storing instructions executable by the at least one processor, and the instructions, when being executed by the at least one processor, are configured to perform the method according to any one of the implementations of the second aspect.

According to a seventh aspect, an embodiment of the present disclosure provides a robot control system, including: a temporary storage shelving unit, a robot, and a control device,
the temporary storage shelving unit including at least one storage position configured to place a to-be-handled object;
the control device being configured to perform the method according to any one of the implementations of the first aspect; and
the robot being configured to perform an operation at the temporary storage shelving unit under indication by the control device.

According to an eighth aspect, an embodiment of the present disclosure provides a robot control system, including: a temporary storage shelving unit and a robot,
the temporary storage shelving unit including at least one storage position configured to place a to-be-handled object; and
the robot being configured to perform the method according to any one of the implementations of the second aspect.

According to a ninth aspect, an embodiment of the present disclosure provides a computer-readable storage medium, the computer-readable storage medium storing computer-executable instructions, and the method according to any one of the implementations of the first aspect or the second aspect being implemented when a processor executes the computer-executable instructions.

According to a tenth aspect, an embodiment of the present disclosure provides a computer program product, including a computer program, the method according to any one of the implementations of the first aspect or the second aspect being implemented when the computer program is executed.

According to the robot control method, apparatus, and system, the control device, and the robot provided in the embodiments of the present disclosure, a storage position or a temporary storage shelving unit at which a user performs an operation is determined, and an operation of a robot is controlled according to the storage position or the temporary storage shelving unit at which the user performs the operation, so that the robot avoids performing an operation at the same storage position simultaneously with the user. Therefore, cases that a robot comes into contact with a user are reduced, thereby reducing injury caused by a robot to a user to some extent, and effectively improving operation safety. In addition, goods sorting/selection efficiency can also be ensured.

### BRIEF DESCRIPTION OF THE DRAWINGS

To describe the technical solutions in the embodiments of the present disclosure or in the related art more clearly, the following briefly describes the accompanying drawings required for describing the embodiments or the related art. Apparently, the accompanying drawings in the following descriptions show some embodiments of the present disclosure, and a person of ordinary skill in the art may still derive other drawings from these accompanying drawings without creative efforts.
FIG. 1 is a schematic diagram of an application scenario according to an embodiment of the present disclosure.
FIG. 2 is a diagram of a principle of avoiding, by a robot, performing an operation at the same storage position with a user according to an embodiment of the present disclosure.
FIG. 3 is a schematic flowchart of a robot control method according to an embodiment of the present disclosure.
FIG. 4 is a schematic flowchart of another robot control method according to an embodiment of the present disclosure.
FIG. 5 is a schematic structural diagram of a temporary storage shelving unit according to an embodiment of the present disclosure.
FIG. 6 is a diagram of a principle of a ping-pong operation according to an embodiment of the present disclosure.
FIG. 7 is a diagram of a principle of a storage position locking operation according to an embodiment of the present disclosure.
FIG. 8 is a schematic diagram of another application scenario according to an embodiment of the present disclosure.
FIG. 9 is a schematic flowchart of still another robot control method according to an embodiment of the present disclosure.
FIG. 10 is a structural block diagram of a robot control apparatus according to an embodiment of the present disclosure.
FIG. 11 is a structural block diagram of another robot control apparatus according to an embodiment of the present disclosure.
FIG. 12 is a structural block diagram of a control device according to an embodiment of the present disclosure.
FIG. 13 is a structural block diagram of a robot according to an embodiment of the present disclosure.
FIG. 14 is a schematic structural diagram of a robot according to an embodiment of the present disclosure.

### DETAILED DESCRIPTION

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are merely some embodiments of the present disclosure rather than all of the embodiments. All other embodiments obtained by a person of ordinary skill in the art based on the embodiments of the present disclosure without creative efforts shall fall within the protection scope of the present disclosure.

The technical solutions provided in the embodiments of the present disclosure may be applied to any suitable industry fields or technical fields, for example, the intelligent warehousing field and the intelligent logistics field.

An example application scenario is as follows: In a goods-to-person goods handling process, a robot may carry goods to a user, and the user sorts and selects goods. For example, when processing a stock keeping unit (SKU) order, the robot may carry a goods box that stores related goods from a warehouse to a specific region, and the user sorts and selects goods inside the goods box in the region to complete distribution and stock-out for the SKU order. After the sorting/selection is completed, the goods box may be carried back to the warehouse by the robot.

In this sorting/selection solution, the robot and the user may have three interaction modes: the user directly sorts and selects goods on the body of the robot; the robot places the goods box onto a temporary storage shelving unit, and the user performs sorting/selection on the temporary storage shelving unit; and the robot places the goods box onto a transport line, and the user performs sorting/selection on the transport line.

The human-robot interaction mode based on the temporary storage shelving unit has the following advantages: compared with directly performing sorting/selection on the body of the robot, direct human-robot interaction can be avoided, and therefore safety and operation convenience are better; and compared with the transport line mode, a floor area is smaller, a temporary storage amount of goods boxes is larger, and costs are lower.

However, the human-robot interaction mode based on the temporary storage shelving unit still has a problem: The robot may come into contact with the user, causing injury to the user. In the embodiments of the present disclosure, a robot is prevented from performing an operation at the same storage position simultaneously with a user, to protect the user and improve safety in a goods handling process.

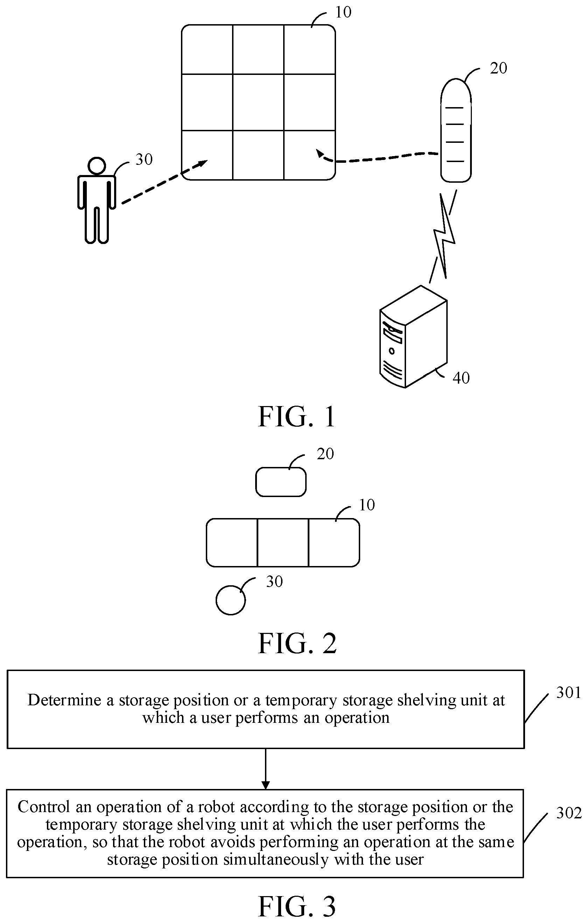

FIG. 1 is a schematic diagram of an application scenario according to an embodiment of the present disclosure. As shown in FIG. 1, to handle goods, a temporary storage shelving unit 10 and a robot 20 may be arranged, and both the robot 20 and a user 30 may perform operations at the temporary storage shelving unit 10. In addition, a control device 40 may be further arranged, and the robot 20 may perform an operation at the temporary storage shelving unit 10 under indication by the control device 40.

The temporary storage shelving unit 10 includes at least one storage position configured to place a to-be-handled object, and the to-be-handled object includes goods and/or a goods box configured to store goods. The robot 20 is configured to handle the to-be-handled object, and the robot 20 avoids performing an operation at the same storage position simultaneously with the user 30.

The temporary storage shelving unit 10 may refer to a shelving unit configured to temporarily store goods, and may specifically refer to a shelving unit used for the robot 20 and the user 30 to perform operations on goods. The robot 20 may include a carrying robot, a sorting/selection robot, and/or the like. The carrying robot may be configured to carry a goods box. The sorting/selection robot may be configured to sort and select goods in a goods box. Certainly, one robot may have both a carrying function and a sorting/selection function. The user 30 may be a person for handling a to-be-handled object, for example, an operator or a stock-out assistant.

The temporary storage shelving unit 10 may include at least one storage position. In FIG. 1, a block is used for representing a storage position. As shown in FIG. 1, the temporary storage shelving unit 10 is divided into nine storage positions. The storage positions are configured to place to-be-handled objects such as goods and/or goods boxes. Both the robot 20 and the user 30 may handle to-be-handled objects, including but not limited to placing, taking, sorting/selection, packaging, and the like.

The placing may mean placing a to-be-handled object into a storage position, for example, placing goods and/or a goods box into a storage position. The taking may mean taking out a to-be-handled object from a storage position, for example, taking out goods and/or a goods box. The sorting/selection means sorting and selecting to-be-handled objects at a storage position, and may particularly mean sorting and selecting goods in a goods box to select goods corresponding to an order. The packaging may mean packaging a to-be-handled object at a storage position, and may particularly mean packaging a goods box. For example, after goods corresponding to an order are sorted and selected to a goods box, the goods box may be packaged, to facilitate subsequent stock-out.

In an example, the robot 20 may take out a goods box containing goods from a warehouse, carry the goods box to the temporary storage shelving unit 10, and place the goods box at a storage position on the temporary storage shelving unit 10, and then the user 30 performs sorting and selection in the goods box at the storage position to select goods corresponding to an order from the goods box. After sorting/selection is completed, the robot 20 then carries the goods box back to the warehouse.

In another optional manner, a specific handling process of goods may be alternatively adjusted according to actual needs. For example, the robot 20 may carry goods instead of a goods box to the temporary storage shelving unit 10 and place the goods at a storage position; or the robot 20 may sort and select goods in place of the user 30; or after sorting/selection is completed, the user 30 may carry the goods box back to the warehouse. This is not limited in this embodiment.

In a goods handling process, the control device 40 may control the robot 20 to avoid performing an operation at the same storage position simultaneously with the user 30. For example, when the user 30 starts to perform an operation at a specific storage position, the robot 20 may be controlled to stop performing an operation at the storage position, to provide safety protection for the user 30 to some extent and improve operation safety. In addition, goods sorting/selection efficiency can also be ensured.

As shown in FIG. 1, storage positions for the robot 20 and the user 30 are both indicated by using dashed lines, indicating that the robot 20 and the user 30 can move to the storage positions to which arrows point, to perform operations, and the robot 20 avoids performing an operation at the same storage position simultaneously with the user 30. For example, when the user 30 performs an operation at a storage position in a lower left corner, the robot 20 can avoid performing an operation at the storage position in the lower left corner, but perform an operation at a storage position in a lower right corner.

FIG. 2 is a diagram of a principle of avoiding, by a robot, performing an operation at the same storage position with a user according to an embodiment of the present disclosure. As shown in FIG. 2, the robot 20 may perform a task on one side of the temporary storage shelving unit 10, and the user 30 may perform a task on the other side of the temporary storage shelving unit 10, to further improve operation safety. In the figure, three blocks in the temporary storage shelving unit 10 are used for representing three storage positions. When the user 30 performs an operation at a specific storage position, the robot 20 avoids performing an operation at the storage position.

Some implementations of the present disclosure are described in detail below with reference to the accompanying drawings. The following embodiments and features in the embodiments may be mutually combined in case that no conflict occurs between the embodiments.

FIG. 3 is a schematic flowchart of a robot control method according to an embodiment of the present disclosure. The method in this embodiment may be performed by a control device. As shown in FIG. 3, the method may include the following steps:
Step 301: Determine a storage position or a temporary storage shelving unit at which a user performs an operation.

In this embodiment, a storage position or a temporary storage shelving unit at which a user performs an operation may be detected in a plurality of manners.

In an optional implementation, a storage position or a temporary storage shelving unit at which a user performs an operation may be detected by using a detection device. The detection device is configured to detect a storage position or a temporary storage shelving unit at which a user performs an operation, and send detected information to the control device.

Correspondingly, the determining a storage position or a temporary storage shelving unit at which a user performs an operation in this step may include: acquiring detection information sent by a detection device, and determining, according to the detection information, the storage position or the temporary storage shelving unit at which the user performs the operation.

The detection device may include but is not limited to at least one of the following: a pressure sensor, a laser radar sensor, an infrared sensor, a visual acquisition device, and a grating sensor.

Optionally, the determining, according to the detection information, the storage position or the temporary storage shelving unit at which the user performs the operation may include: when it is determined, according to the detection information, that the user appears within a preset range around a temporary storage shelving unit, determining that the user is performing an operation at the temporary storage shelving unit; and/or when it is determined, according to the detection information, that an arm of the user stretches into a storage position or a distance between an arm of the user and a storage position is less than a preset value, determining that the user is performing an operation at the storage position.

In an example, a pressure sensor may be arranged on the ground around a temporary storage shelving unit. If a user enters the surrounding of the temporary storage shelving unit, the pressure sensor may detect a corresponding signal, to determine a temporary storage shelving unit at which the user performs an operation. This solution is simple and easy to implement.

In another example, a laser radar sensor or an infrared sensor may be arranged around a temporary storage shelving unit. When someone is close, the laser radar sensor or the infrared sensor may detect a corresponding signal, to determine a temporary storage shelving unit at which a user performs an operation. Detection efficiency and accuracy are both high.

In still another example, a visual acquisition device such as camera may be arranged around a temporary storage shelving unit. There may be one or more cameras. The camera may be a common camera, a 3D camera, or the like. An image of a user may be acquired by the one or more cameras, to analyze a temporary storage shelving unit or a storage position at which the user performs an operation. Accuracy is high.

In yet another example, a plurality of grating sensors may be arranged in a temporary storage shelving unit. The grating sensors detect whether an arm of a user stretches into a storage position or whether a distance between an arm of a user and a storage position is less than a preset value, to determine a storage position at which the user performs an operation. This can quickly and accurately determine a storage position at which a user performs an operation, improve detection accuracy, and effectively ensure normal operating of a system.

In another optional implementation, the control device may determine, directly by using an input of the user, the temporary storage shelving unit or the storage position at which the user performs the operation. Specifically, the determining a storage position or a temporary storage shelving unit at which a user performs an operation in this step may include: acquiring operation information input by the user, and determining, according to the operation information, the temporary storage shelving unit or the storage position at which the user performs the operation.

For example, the control device may be a mobile phone carried by the user, and the operation information input by the user may include identification information of the temporary storage shelving unit or the storage position at which the operation is performed. Alternatively, the control device may be a processing terminal arranged beside the temporary storage shelving unit. After the user is close to the temporary storage shelving unit, the user directly presses a corresponding button on the processing terminal, and the processing terminal may determine, according to the button pressed by the user, the temporary storage shelving unit or the storage position at which the user performs the operation.

After determining the temporary storage shelving unit or the storage position at which the user performs the operation, the control device may control a robot according to the temporary storage shelving unit or the storage position at which the user performs the operation.

The operation information input by the user is acquired, so that the temporary storage shelving unit or the storage position at which the user performs the operation can be accurately determined, thereby meeting a work requirement of the user.

Step 302: Control an operation of a robot according to the storage position or the temporary storage shelving unit at which the user performs the operation, so that the robot avoids performing an operation at the same storage position simultaneously with the user.

In this embodiment, there may be a plurality of specific implementations of avoiding, by the robot, performing an operation at the same storage position simultaneously with the user. Specifically, the robot may only avoid performing an operation at a storage position at which the user is performing an operation, or may avoid performing an operation at a storage position at which the user is performing an operation and a surrounding storage position.

For example, because a temporary storage shelving unit includes a storage position, the robot may avoid performing an operation at the same temporary storage shelving unit simultaneously with the user, thereby avoiding performing an operation at the same storage position simultaneously with the user.

According to the robot control method provided in this embodiment, a storage position or a temporary storage shelving unit at which a user performs an operation is determined, and an operation of a robot is controlled according to the storage position or the temporary storage shelving unit at which the user performs the operation, so that the robot avoids performing an operation at the same storage position simultaneously with the user. This can reduce cases that a robot comes into contact with a user, thereby reducing injury caused by a robot to a user to some extent, and effectively improving operation safety. In addition, goods sorting/selection efficiency can also be ensured.

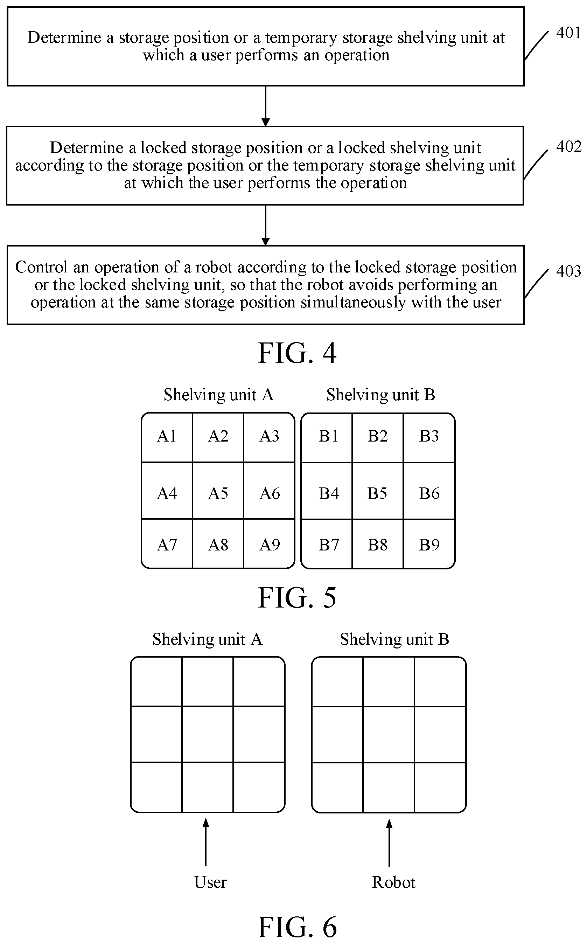

FIG. 4 is a schematic flowchart of another robot control method according to an embodiment of the present disclosure. Based on the technical solution provided in the foregoing embodiment, in this embodiment, a robot is controlled by using a locked storage position or a locked shelving unit. As shown in FIG. 4, the method provided in this embodiment may include the following steps:
Step 401: Determine a storage position or a temporary storage shelving unit at which a user performs an operation.

For a specific implementation principle and process of step 401 in this embodiment, reference may be made to the foregoing embodiment. Details are not described herein again.

Step 402: Determine a locked storage position or a locked shelving unit according to the storage position or the temporary storage shelving unit at which the user performs the operation.

Step 403: Control an operation of a robot according to the locked storage position or the locked shelving unit, so that the robot avoids performing an operation at the same storage position simultaneously with the user.

In this embodiment, in step 402 and step 403, the operation of the robot can be controlled according to the storage position or the temporary storage shelving unit at which the user performs the operation, so that the robot avoids performing an operation at the same storage position simultaneously with the user.

Optionally, the locked shelving unit may include the temporary storage shelving unit at which the user performs the operation. The locked storage position may include the storage position at which the user performs the operation. Alternatively, in another optional implementation, the locked storage position may include the storage position at which the user performs the operation and a storage position within a preset range around the storage position at which the user performs the operation.

FIG. 5 is a schematic structural diagram of a temporary storage shelving unit according to an embodiment of the present disclosure. As shown in FIG. 5, a plurality of temporary storage shelving units may be arranged, which are respectively denoted as a shelving unit A and a shelving unit B. Each shelving unit has a plurality of storage positions, which are respectively denoted as A1-A9 and B1-B9.

In an example, the robot may avoid performing an operation at a locked shelving unit, to avoid performing an operation at the same storage position simultaneously with the user. For example, when the user performs an operation at the shelving unit A, the shelving unit A is considered as a locked shelving unit. The robot avoids performing an operation at the shelving unit A, and may perform an operation at the shelving unit B or perform no operation, thereby avoiding performing an operation at the same shelving unit simultaneously with the user.

In another example, the robot may avoid performing an operation at a locked storage position, to avoid performing an operation at the same storage position simultaneously with the user. For example, when the user performs an operation at the storage position A4, the storage position A4 is considered as a locked storage position. The robot avoids performing an operation at the storage position A4, and may perform an operation at the other eight storage positions of the shelving unit A or perform an operation at all the storage positions of the shelving unit B.

As described above, the locked storage position may further include the storage position within the preset range around the storage position at which the user performs the operation. The preset range may be selected according to actual needs.

Optionally, the storage position within the preset range around the storage position at which the user performs the operation may include at least one of the following: storage positions in a row to which the storage position at which the user performs the operation belongs; storage positions in a column to which the storage position at which the user performs the operation belongs; and a storage position adjacent to the storage position at which the user performs the operation.

In an example, a current storage position at which the user performs an operation is A4, a column to which A4 belongs, that is, A1, A4, and A7, may be all used as locked storage positions. In actual application, when a person stands in front of the storage position A4 to perform an operation, the body may be close to the storage positions A1 and A7. Therefore, storage positions in the column to which A4 belongs may be all used as locked storage positions, to avoid an operation by the robot.

In another example, a current storage position at which the user performs an operation is A4, a row to which A4 belongs, that is, A4, A5, and A6, may be all used as locked storage positions. In actual application, if the user performs an operation at A4 and the robot performs an operation at A5, a protruding mechanism of the robot, for example, a robotic arm or a pallet fork, may overreach to the storage position A4 in case of a slight deviation, or an arm of the user may accidentally stretch into the storage position A5. Especially for a shelving unit at which there is no baffle plate between storage positions in the same row, the robot and the user are more likely to perform operations at storage positions in the same row, causing injury to the user. Therefore, the robot may be prohibited from performing an operation at a storage position in the same row.

In still another example, the robot may be prohibited from performing an operation at a storage position adjacent to the storage position at which the user performs the operation. The being adjacent may mean being adjacent in four directions (up, down, left, and right), being adjacent in eight directions (up, down, left, right, upper left, lower left, upper right, and lower right), or the like. The being adjacent in four directions is used as an example. When the user performs an operation at A4, A1, A4, A5, and A7 may be all used as locked storage positions, to prohibit an operation by the robot.

For the foregoing locked storage position and locked shelving unit, the term "locked" is intended to indicate that the robot is prohibited from performing an operation at the storage position and the shelving unit, but does not necessarily require that an action of locking the storage position or the shelving unit be performed. Certainly, an operation of locking the storage position or the shelving unit may be alternatively performed. For example, a status value of the storage position or the shelving unit is changed, or a mechanism for prohibiting the robot from approaching is arranged at the storage position or the shelving unit.

According to the robot control method provided in this embodiment, after a storage position or a temporary storage shelving unit at which a user performs an operation is determined, a locked storage position or a locked shelving unit may be determined according to the storage position or the temporary storage shelving unit at which the user performs the operation, and an operation of a robot is controlled according to the locked storage position or the locked shelving unit, to prevent the robot and the user from simultaneously performing operations at the same storage position. This can quickly and accurately control the robot, and ensure safety of the user.

Based on the technical solution provided in the foregoing embodiment, optionally, there may be a plurality of implementations of controlling the robot to avoid performing an operation at the same storage position or the same temporary storage shelving unit simultaneously with the user. **In** this embodiment, there may be a plurality of implementations, for example, controlling the robot to stop an operation, perform an operation at another storage position, or wait and then perform an operation. This is separately described below.

In an optional implementation, the controlling an operation of a robot according to the storage position or the temporary storage shelving unit at which the user performs the operation may include: when the robot is performing an operation at a storage position or a temporary storage shelving unit, if it is detected that the user starts to perform an operation at the storage position or the temporary storage shelving unit, controlling the robot to stop performing the operation at the storage position or the temporary storage shelving unit.

For example, when an operation is performed at the storage position A1, if it is detected that the user starts to perform an operation at the storage position A1, the robot is controlled to stop performing an operation at the storage position A1, to eliminate a safety hazard of injury to the user. This has simple logic, and is easy to implement and effective.

The robot may include a protruding mechanism configured to perform an operation on a to-be-handled object, for example, a pallet fork or a robotic arm, and the controlling the robot to stop performing the operation at the storage position or the temporary storage shelving unit may specifically include: canceling an operation performed by the robot at a current storage position or temporary storage shelving unit, and if the protruding mechanism has stretched into the storage position or the temporary storage shelving unit, controlling the protruding mechanism to retract or stop.

Optionally, in a case that the robot is taking out the to-be-handled object, the controlling the protruding mechanism to retract may include: controlling the protruding mechanism to retract if the protruding mechanism fails to drag the to-be-handled object; and/or controlling the protruding mechanism to take out the to-be-handled object if the protruding mechanism successfully drags the to-be-handled object.

Optionally, in a case that the robot is placing the to-be-handled object, the controlling the protruding mechanism to retract may include: controlling the robot to take back the to-be-handled object if the protruding mechanism does not place the to-be-handled object steadily; and/or controlling the protruding mechanism to retract if the protruding mechanism has placed the to-be-handled object steadily.

In the foregoing solution, different situations during goods picking/placing can be distinguished. If goods cannot be taken out or placed immediately, the protruding mechanism quickly retracts, to stop an operation at a storage position or a temporary storage shelving unit in a timely manner, thereby improving operation safety of the user. If most work of goods picking or goods placing is completed, the entire goods picking or goods placing operation may continue to be completed, thereby improving operation efficiency while ensuring safety.

In another optional implementation, the controlling an operation of a robot according to the storage position or the temporary storage shelving unit at which the user performs the operation may include: if it is detected that the user starts to perform an operation at a second storage position on the temporary storage shelving unit when the robot is performing an operation at a first storage position on a temporary storage shelving unit, controlling the robot to stop performing the operation at the temporary storage shelving unit after completing the operation at the first storage position.

In still another optional implementation, the controlling an operation of a robot according to the storage position or the temporary storage shelving unit at which the user performs the operation may include: when the user is performing an operation at the storage position or the temporary storage shelving unit, controlling the robot to perform an operation at another storage position other than the storage position at which the user performs the operation, or controlling the robot to perform an operation at another temporary storage shelving unit other than the temporary storage shelving unit at which the user performs the operation.

For example, when the user performs an operation at the storage position A1, the robot may perform an operation at another storage position, for example, the storage position A2, to avoid performing an operation at the same storage position simultaneously with the user. For another example, when the user performs an operation at the shelving unit A, the robot may perform an operation at another temporary storage shelving unit, for example, the shelving unit B, to avoid performing an operation at the same temporary storage shelving unit simultaneously with the user. This can improve operation safety of the user, and can also reduce a time in which the robot is in an idle state, thereby improving goods handling efficiency.

Further, the control device may further determine a priority of the another storage position or temporary storage shelving unit according to a distance between the another storage position or temporary storage shelving unit and the robot, to control the robot to perform an operation according to the priority of the another storage position or the another temporary storage shelving unit.

Specifically, the priority of the another storage position or temporary storage shelving unit is determined according to the distance between the another storage position or temporary storage shelving unit and the robot. A shorter distance indicates a higher priority. The robot may perform an operation at the another storage position or temporary storage shelving unit according to the priority.

For example, when the robot performs an operation at the shelving unit A, the user approaches the shelving unit A and starts to perform an operation at the shelving unit A. In this case, the robot may give up the shelving unit A and start to perform an operation at another temporary storage shelving unit. Assuming that the robot is currently closest to the shelving unit B among other temporary storage shelving units, the robot may preferentially perform an operation at the shelving unit B. If there is no handling task at the shelving unit B, for example, there is no goods to be picked and there is no storage position for placing goods either, the robot may continue to move to a temporary storage shelving unit at the next priority to perform a handling task.

In the foregoing solution, the robot may preferentially perform an operation at an adjacent storage position or temporary storage shelving unit, so that goods handling efficiency can be effectively improved.

In still another optional implementation, the controlling an operation of a robot according to the storage position or the temporary storage shelving unit at which the user performs the operation may include: controlling the robot to wait until the operation performed by the user at the storage position or the temporary storage shelving unit is completed and then perform an operation at the storage position or the temporary storage shelving unit.

For example, when the user performs an operation at the shelving unit A, the robot may wait nearby, and after the user completes the operation, perform an operation at the shelving unit A. Control logic is simple, and is not likely to have an error.

In addition, alternatively, the user may actively choose to avoid performing an operation at the same temporary storage shelving unit or the same storage position with the robot. For example, when the user enters a region in which a temporary storage shelving unit is arranged, if the robot is performing an operation at a specific temporary storage shelving unit or a specific storage position, the user may actively choose to perform an operation at another temporary storage shelving unit or storage position, to avoid being excessively close to the robot and getting hurt.

In the technical solutions provided in the foregoing embodiments, the robot may be configured to avoid performing an operation at the same temporary storage shelving unit simultaneously with the user, or the robot may be configured to avoid performing an operation at the same storage position simultaneously with the user. A person skilled in the art may set a specific operation process of the robot according to actual needs. Two examples are provided below: a ping-pong operation and a storage position locking operation.

FIG. 6 is a diagram of a principle of a ping-pong operation according to an embodiment of the present disclosure. As shown in FIG. 6, temporary storage shelving units include a shelving unit A and a shelving unit B. When a robot performs an operation at the shelving unit A, a user may actively choose not to perform an operation at the shelving unit A, but to perform an operation at the shelving unit B. Alternatively, when a user performs an operation at the shelving unit A, a control device may schedule a robot not to perform an operation at the shelving unit A, but to perform an operation only at the shelving unit B. After completing the operation at the shelving unit A, the user moves to the shelving unit B to perform an operation. **In** this case, the robot moves from the shelving unit B to the shelving unit A to perform an operation. Because the robot and the user perform operations alternately, this can be referred to as a ping-pong operation.

For example, the robot receives a goods picking/placing instruction and moves to the shelving unit A. When the robot performs a goods picking/placing operation, if a user enters a region around the shelving unit A, the robot determines that the user starts to perform an operation at the shelving unit A, and the robot stops the goods picking/placing operation.

Whether a user enters the region around the shelving unit A may be detected by using a detection device arranged on the shelving unit A or a detection device around the shelving unit A. For example, a pressure sensor, a laser radar scanner, or a 3D camera monitor may be arranged on the ground to determine whether someone is close, so as to determine whether there is a user performing an operation at the shelving unit A. Alternatively, after a user is close to the shelving unit A, the user may press a corresponding button, so that the control device can determine that the user is to start to perform an operation at the shelving unit A.

The stopping the goods picking/placing operation by the robot may include: if a to-be-stopped operation is a goods picking operation, stopping picking goods, and if a protruding mechanism has entered a temporary storage shelving unit to pick goods but has not successfully dragged a goods box, retracting the protruding mechanism, where the robot leaves or waits still, and after the robot leaves, the robot may move to a new temporary storage shelving unit to perform an operation according to a task allocated by a system; or if a to-be-stopped operation is a goods placing operation, canceling the goods placing operation, and if the protruding mechanism has stretched into a temporary storage shelving unit, taking back a goods box or stopping.

In addition, if it is detected that the user starts to perform an operation at a second storage position on the temporary storage shelving unit when the robot is performing an operation at a first storage position on a temporary storage shelving unit, the robot may stop performing the operation at the temporary storage shelving unit after completing the operation at the first storage position.

Specifically, if it is detected, by using a detection apparatus such as a grating sensor, that a human hand has stretched into a temporary storage shelving unit to perform an operation but has not entered a storage position at which the robot performs an operation, the robot continues to complete a goods picking/placing operation at the storage position, and may leave a current temporary storage shelving unit after completing the operation.

In a process of the ping-pong operation, after the goods picking/placing operation of the robot is hindered at the shelving unit A, the goods picking/placing operation is preferentially arranged to be performed at the adjacent shelving unit B. The robot moves to another temporary storage shelving unit to perform an operation only if there is no vacant storage position at the shelving unit B for storing a goods box or there is no goods box to be taken out.

In a service process of a box-type goods-to-person workstation, two temporary storage shelving units may be configured for each workstation. A robot and a user do not simultaneously perform operations at the same temporary storage shelving unit. That is, a manual operation is performed at one shelving unit, and the robot picks and places goods at the other shelving unit. After the manual operation is completed, the user and the robot exchange operation positions, to perform operations cyclically in this manner. This avoids a possibility of human-robot contact in physical space, thereby improving operation safety of the user.

A specific implementation solution of the ping-pong operation is described above, which can enable a robot to avoid performing an operation at a locked shelving unit. A solution for a locked storage position is similar, and is described below.

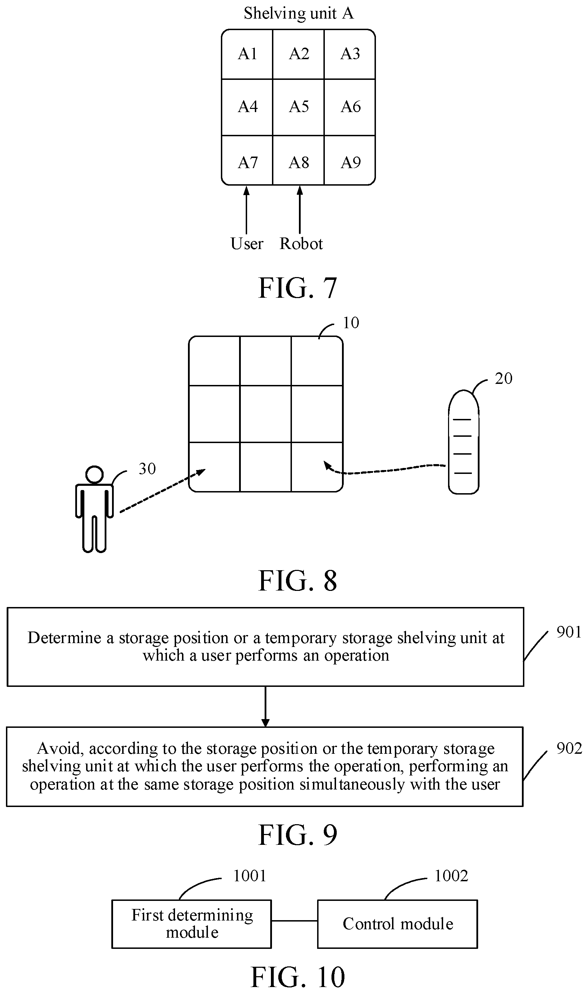

FIG. 7 is a diagram of a principle of a storage position locking operation according to an embodiment of the present disclosure. As shown in FIG. 7, a temporary storage shelving unit includes a shelving unit A, and the shelving unit A includes storage positions A1-A9. When a robot performs an operation at a specific storage position, a user may actively choose not to perform an operation at the storage position, but to perform an operation at another storage position. Alternatively, when a user performs an operation at a specific storage position, a control device may schedule a robot not to perform an operation at the storage position, but to perform an operation only at another storage position.

In the foregoing the solution, when a robot performs an operation at a specific storage position, a user may actively choose not to perform an operation at the same storage position with the robot. However, in case of a human error, it is still possible that the user and the robot perform operations at the same storage position. In this case, a dynamic status of the user performing the operation at the storage position may be detected to avoid a problem.

When it is detected that a human hand enters a specific storage position, for example, the storage position A7, at the shelving unit A, if there is no robot performing a goods picking/placing operation in this storage position, the storage position A7 is locked, and a robot cannot enter the storage position A7 to perform an operation, but preferentially performs a goods picking/placing operation at another storage position, for example, A8, at the shelving unit A. During a goods picking operation, if there is no to-be-picked goods box at the another storage position, the robot may move to another temporary storage shelving unit or perform another task. During a goods placing operation if the shelving unit A has no vacant storage position, the robot may move to another temporary storage shelving unit to place goods, or place goods in another target position.

When it is detected that a human hand enters a specific storage position, for example, the storage position A7, at the shelving unit A, if there is a robot performing a goods picking/placing operation at the storage position A7, the robot may stop the goods picking/placing operation. In case of a goods picking operation, if a protruding mechanism has entered a temporary storage shelving unit to pick goods but has not successfully dragged a goods box, the protruding mechanism may be retracted from the shelving unit A, and the robot leaves or waits still. In case of a goods placing operation, the goods placing operation may be canceled. If the protruding mechanism has stretched into the storage position A7, a goods box is taken back, and the robot leaves or waits still.

In a service process of a box-type goods-to-person workstation, any number of temporary storage shelving units may be configured for each workstation. A robot and a user can simultaneously perform operations at one temporary storage shelving unit, but cannot perform operations at the same storage position. In this solution, a robot and a user can perform operations at the same temporary storage shelving unit. Therefore, an occupied area of a workstation is smaller, a person moves less, utilization of a storage position of a temporary storage shelving unit is higher, the number of shelving units required in a goods handling process is reduced, and costs are lower.

Based on the technical solutions provided in the foregoing embodiments, optionally, one side of the temporary storage shelving unit is used for the user to perform an operation, and the other side is used for the robot to perform an operation. A protection apparatus used for preventing the robot from coming into contact with the user is arranged on the side, of the temporary storage shelving unit, that is used for the user to perform an operation.

For details, refer to FIG. 2. The robot and the user avoid performing operations on the same side, thereby improving operation security. A protection apparatus may be arranged on the side, of the temporary storage shelving unit, that is used for the user to perform an operation, to prevent the robot from coming into contact with the user.

A specific shape, size, and structure of the protection apparatus may be set according to actual needs. Optionally, the protection apparatus may be a protection plate or the like. The protection plate may include at least one horizontal sheet metal and/or at least one vertical sheet metal. A horizontal direction refers to a length direction of the shelving unit, and a vertical direction refers to a height direction of the shelving unit.

Optionally, a width of a storage position of the temporary storage shelving unit may be the same as a depth of a goods box. The width may refer to a length of the temporary storage shelving unit in a front-back direction, and the front-back direction refers to a corresponding front-back direction when the user performs an operation at the temporary storage shelving unit. A horizontal sheet metal and a vertical sheet metal may be arranged on a side, of the temporary storage shelving unit, that faces the user. Sizes of the sheet metals may be set according to statuses of the shelving unit and the storage position. For example, a width of the horizontal sheet metal may be 100 mm, a height may be 5 mm, and a length may be the same as a length of the shelving unit, to provide a safety spacing for the robot and the user to perform operations. The safety spacing is greater than a distance from the farthest end after a protruding mechanism of the robot stretches into the storage position.

In actual application, due to existence of the sheet metals, an actual width of the temporary storage shelving unit increases. When the robot picks and places goods by using a pallet fork, after the pallet fork stretches into a storage position, a finger end of the pallet fork does not exceed the width of the shelving unit after the pallet fork extends to the maximum length, to prevent contact with the user. In addition, in the storage position locking solution, when it is monitored that the user performs an operation at a storage position, space is left for the system to control the robot to stop an operation.

In the solution of goods handling based on a locked storage position, the foregoing protection apparatus may be especially added to prevent a risk of collision with the protruding mechanism of robot during operation by the user, to eliminate safety hazards, and further improve operation safety.

Based on the technical solutions provided in the foregoing embodiments, optionally, some or all of the processes performed by the control device may be alternatively performed by the robot. For example, the robot may autonomously determine how to perform an operation at a temporary storage shelving unit or a storage position, to avoid the user.

FIG. 8 is a schematic diagram of another application scenario according to an embodiment of the present disclosure. As shown in FIG. 8, a temporary storage shelving unit 10 and a robot 20 may be arranged. The robot 20 may autonomously determine to perform an operation at a specific temporary storage shelving unit or storage position, or not to perform an operation at a specific temporary storage shelving unit or storage position, to avoid performing an operation at the same storage position simultaneously with a user.

In the scenario shown in FIG. 8, a control device may not be included, or a control device may be included but the control device is configured to implement another auxiliary function, for example, sending operation information input by a user to the robot, and how the robot specifically performs an operation at a temporary storage shelving unit or a storage position may be autonomously determined by the robot. On this basis, for a processing process and effect of the robot in the scenario shown in FIG. 8, reference may be made to the processing process and effect of the control device in the scenario shown in FIG. 1.

FIG. 9 is a schematic flowchart of still another robot control method according to an embodiment of the present disclosure. The robot control method in this embodiment may be applied to a robot. As shown in FIG. 9, the method may include the following steps:
Step 901: Determine a storage position or a temporary storage shelving unit at which a user performs an operation.
Step 902: Avoid, according to the storage position or the temporary storage shelving unit at which the user performs the operation, performing an operation at the same storage position simultaneously with the user.

In an optional implementation, the avoiding, according to the storage position or the temporary storage shelving unit at which the user performs the operation, performing an operation at the same storage position simultaneously with the user includes:
determining a locked storage position or a locked shelving unit according to the storage position or the temporary storage shelving unit at which the user performs the operation; and
avoiding performing an operation at the locked storage position or the locked shelving unit, to avoid performing an operation at the same storage position simultaneously with the user.

In an optional implementation, the determining a storage position or a temporary storage shelving unit at which a user performs an operation includes:
acquiring detection information sent by a detection device, and determining, according to the detection information, the storage position or the temporary storage shelving unit at which the user performs the operation,
the detection device including at least one of the following: a pressure sensor, a laser radar sensor, an infrared sensor, a visual acquisition device, and a grating sensor.

In an optional implementation, the determining, according to the detection information, the storage position or the temporary storage shelving unit at which the user performs the operation includes:
when it is determined, according to the detection information, that the user appears within a preset range around a temporary storage shelving unit, determining that the user is performing an operation at the temporary storage shelving unit; and/or
when it is determined, according to the detection information, that an arm of the user stretches into a storage position or a distance between an arm of the user and a storage position is less than a preset value, determining that the user is performing an operation at the storage position.

In an optional implementation, the determining a storage position or a temporary storage shelving unit at which a user performs an operation includes:
receiving operation information that is input by the user and that is sent by a control device, and determining, according to the operation information, the temporary storage shelving unit or the storage position at which the user performs the operation.

In an optional implementation, the avoiding, according to the storage position or the temporary storage shelving unit at which the user performs the operation, performing an operation at the same storage position simultaneously with the user includes:
in a process of performing an operation at a storage position or a temporary storage shelving unit, if it is detected that the user starts to perform an operation at the storage position or the temporary storage shelving unit, stopping performing the operation at the storage position or the temporary storage shelving unit.

In an optional implementation, the robot includes a protruding mechanism configured to perform an operation on a to-be-handled object; and
the stopping performing the operation at the storage position or the temporary storage shelving unit includes:
canceling an operation performed at a current storage position or temporary storage shelving unit, and if the protruding mechanism has stretched into the storage position or the temporary storage shelving unit, controlling the protruding mechanism to retract or stop.

In an optional implementation, in a case that the robot is taking out the to-be-handled object, the controlling the protruding mechanism to retract includes:
controlling the protruding mechanism to retract if the protruding mechanism fails to drag the to-be-handled object; and/or
taking out the to-be-handled object if the protruding mechanism successfully drags the to-be-handled object.

In an optional implementation, in a case that the robot is placing the to-be-handled object, the controlling the protruding mechanism to retract includes:
taking back the to-be-handled object if the protruding mechanism does not place the to-be-handled object steadily; and/or
controlling the protruding mechanism to retract if the protruding mechanism has placed the to-be-handled object steadily.

In an optional implementation, the avoiding, according to the storage position or the temporary storage shelving unit at which the user performs the operation, performing an operation at the same storage position simultaneously with the user includes:
if it is detected that the user starts to perform an operation at a second storage position on the temporary storage shelving unit when an operation is being performed at a first storage position on a temporary storage shelving unit, completing the operation at the first storage position and then stopping performing an operation at the temporary storage shelving unit.

In an optional implementation, the avoiding, according to the storage position or the temporary storage shelving unit at which the user performs the operation, performing an operation at the same storage position simultaneously with the user includes:
when the user is performing an operation at the storage position or the temporary storage shelving unit, performing an operation at another storage position other than the storage position at which the user performs the operation, or performing an operation at another temporary storage shelving unit other than the temporary storage shelving unit at which the user performs the operation.

In an optional implementation, the method further includes:
determining a priority of the another storage position or temporary storage shelving unit according to a distance between the another storage position or temporary storage shelving unit and the robot, to perform an operation according to the priority of the another storage position or the another temporary storage shelving unit.

In an optional implementation, the avoiding, according to the storage position or the temporary storage shelving unit at which the user performs the operation, performing an operation at the same storage position simultaneously with the user includes:
waiting until the operation performed by the user at the storage position or the temporary storage shelving unit is completed and then performing an operation at the storage position or the temporary storage shelving unit.

For specific implementation principles and processes of the steps in the robot control method of this embodiment, reference may be made to the foregoing embodiments. Details are not described herein again.

According to the robot control method provided in this embodiment, a storage position or a temporary storage shelving unit at which a user performs an operation may be determined, and a robot avoids, according to the storage position or the temporary storage shelving unit at which the user performs the operation, performing an operation at the same storage position simultaneously with the user. Therefore, cases that a robot comes into contact with a user are reduced, thereby reducing injury caused by a robot to a user to some extent, and effectively improving operation safety. In addition, goods sorting/selection efficiency can also be ensured.

FIG. 10 is a structural block diagram of a robot control apparatus according to an embodiment of the present disclosure. The robot control apparatus shown in FIG. 10 may be applied to a control device. As shown in FIG. 10, the apparatus may include:
a first determining module 1001, configured to determine a storage position or a temporary storage shelving unit at which a user performs an operation; and
a control module 1002, configured to control an operation of a robot according to the storage position or the temporary storage shelving unit at which the user performs the operation, so that the robot avoids performing an operation at the same storage position simultaneously with the user.

In an optional implementation, the control module 1002 is specifically configured to:
determine a locked storage position or a locked shelving unit according to the storage position or the temporary storage shelving unit at which the user performs the operation; and
control the operation of the robot according to the locked storage position or the locked shelving unit.

In an optional implementation, the locked shelving unit includes the temporary storage shelving unit at which the user performs the operation; and
the locked storage position includes the storage position at which the user performs the operation, or the locked storage position includes the storage position at which the user performs the operation and a storage position within a preset range around the storage position at which the user performs the operation.

In an optional implementation, the storage position within the preset range around the storage position at which the user performs the operation includes at least one of the following: storage positions in a row to which the storage position at which the user performs the operation belongs; storage positions in a column to which the storage position at which the user performs the operation belongs; and a storage position adjacent to the storage position at which the user performs the operation.

In an optional implementation, the first determining module 1001 is specifically configured to:
acquire detection information sent by a detection device, and determining, according to the detection information, the storage position or the temporary storage shelving unit at which the user performs the operation,
the detection device including at least one of the following: a pressure sensor, a laser radar sensor, an infrared sensor, a visual acquisition device, and a grating sensor.

In an optional implementation, the first determining module 1001 is specifically configured to:
acquire the detection information sent by the detection device; and
when it is determined, according to the detection information, that the user appears within a preset range around a temporary storage shelving unit, determine that the user is performing an operation at the temporary storage shelving unit; and/or
when it is determined, according to the detection information, that an arm of the user stretches into a storage position or a distance between an arm of the user and a storage position is less than a preset value, determine that the user is performing an operation at the storage position.

In an optional implementation, the first determining module 1001 is specifically configured to:
acquire operation information input by the user, and determine, according to the operation information, the temporary storage shelving unit or the storage position at which the user performs the operation.

In an optional implementation, the control module 1002 is specifically configured to:
if it is detected that the user starts to perform an operation at the storage position or the temporary storage shelving unit when the robot is performing an operation at a storage position or a temporary storage shelving unit, control the robot to stop performing the operation at the storage position or the temporary storage shelving unit.

In an optional implementation, the robot includes a protruding mechanism configured to perform an operation on a to-be-handled object; and
when controlling the robot to stop performing the operation at the storage position or the temporary storage shelving unit, the control module 1002 is specifically configured to:
cancel an operation performed by the robot at a current storage position or temporary storage shelving unit, and if the protruding mechanism has stretched into the storage position or the temporary storage shelving unit, control the protruding mechanism to retract or stop.

In an optional implementation, in a case that the robot is taking out the to-be-handled object, when controlling the protruding mechanism to retract, the control module 1002 is specifically configured to:
control the protruding mechanism to retract if the protruding mechanism fails to drag the to-be-handled object; and/or
control the protruding mechanism to take out the to-be-handled object if the protruding mechanism successfully drags the to-be-handled object.

In an optional implementation, in a case that the robot is placing the to-be-handled object, when controlling the protruding mechanism to retract, the control module 1002 is specifically configured to:
control the robot to take back the to-be-handled object if the protruding mechanism does not place the to-be-handled object steadily; and/or
control the protruding mechanism to retract if the protruding mechanism has placed the to-be-handled object steadily.

In an optional implementation, the control module 1002 is specifically configured to:
if it is detected that the user starts to perform an operation at a second storage position on the temporary storage shelving unit when the robot is performing an operation at a first storage position on a temporary storage shelving unit, control the robot to stop performing the operation at the temporary storage shelving unit after completing the operation at the first storage position.

In an optional implementation, the control module 1002 is specifically configured to:
when the user is performing an operation at the storage position or the temporary storage shelving unit, control the robot to perform an operation at another storage position other than the storage position at which the user performs the operation, or control the robot to perform an operation at another temporary storage shelving unit other than the temporary storage shelving unit at which the user performs the operation.

In an optional implementation, the control module 1002 is further configured to:
determine a priority of the another storage position or temporary storage shelving unit according to a distance between the another storage position or temporary storage shelving unit and the robot, to control the robot to perform an operation according to the priority of the another storage position or the another temporary storage shelving unit.

In an optional implementation, the control module 100 is specifically configured to:
control the robot to wait until the operation performed by the user at the storage position or the temporary storage shelving unit is completed and then perform an operation at the storage position or the temporary storage shelving unit.

The apparatus provided in this embodiment may be configured to perform the technical solution in the method embodiment shown in FIG. 1 to FIG. 7. Implementation principles and technical effects thereof are similar. Details are not described herein again.

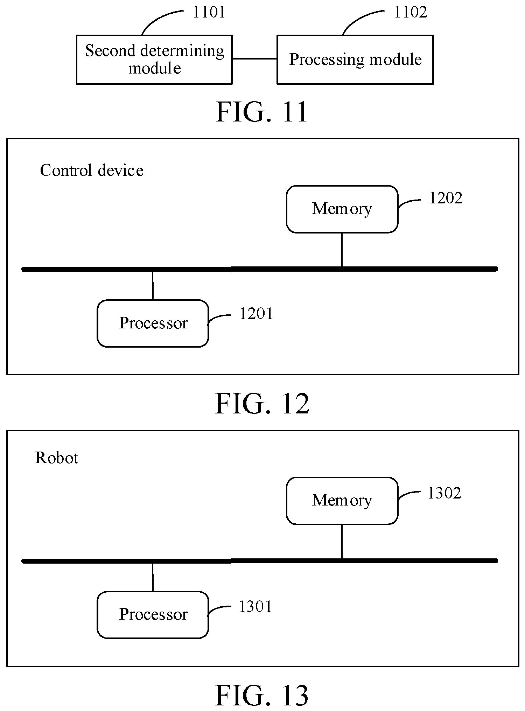

FIG. 11 is a structural block diagram of another robot control apparatus according to an embodiment of the present disclosure. The robot control apparatus shown in FIG. 11 may be applied to a robot. As shown in FIG. 11, the apparatus may include:
a second determining module 1101, configured to determine a storage position or a temporary storage shelving unit at which a user performs an operation; and
a processing module 1102, configured to avoid, according to the storage position or the temporary storage shelving unit at which the user performs the operation, performing an operation at the same storage position simultaneously with the user.

In an optional implementation, the processing module 1102 is specifically configured to:
determine a locked storage position or a locked shelving unit according to the storage position or the temporary storage shelving unit at which the user performs the operation; and
avoid performing an operation at the locked storage position or the locked shelving unit, to avoid performing an operation at the same storage position simultaneously with the user.

In an optional implementation, the locked shelving unit includes the temporary storage shelving unit at which the user performs the operation; and
the locked storage position includes the storage position at which the user performs the operation, or the locked storage position includes the storage position at which the user performs the operation and a storage position within a preset range around the storage position at which the user performs the operation.

In an optional implementation, the storage position within the preset range around the storage position at which the user performs the operation includes at least one of the following: storage positions in a row to which the storage position at which the user performs the operation belongs; storage positions in a column to which the storage position at which the user performs the operation belongs; and a storage position adjacent to the storage position at which the user performs the operation.

In an optional implementation, the second determining module 1101 is specifically configured to:
acquire detection information sent by a detection device, and determining, according to the detection information, the storage position or the temporary storage shelving unit at which the user performs the operation,
the detection device including at least one of the following: a pressure sensor, a laser radar sensor, an infrared sensor, a visual acquisition device, and a grating sensor.

In an optional implementation, the second determining module 1101 is specifically configured to:
acquire the detection information sent by the detection device; and
when it is determined, according to the detection information, that the user appears within a preset range around a temporary storage shelving unit, determine that the user is performing an operation at the temporary storage shelving unit; and/or
when it is determined, according to the detection information, that an arm of the user stretches into a storage position or a distance between an arm of the user and a storage position is less than a preset value, determine that the user is performing an operation at the storage position.

In an optional implementation, the second determining module 1101 is specifically configured to:
receive operation information that is input by the user and that is sent by a control device, and determine, according to the operation information, the temporary storage shelving unit or the storage position at which the user performs the operation.

In an optional implementation, the processing module 1102 is specifically configured to:
in a process of performing an operation at a storage position or a temporary storage shelving unit, if it is detected that the user starts to perform an operation at the storage position or the temporary storage shelving unit, stop performing the operation at the storage position or the temporary storage shelving unit.

In an optional implementation, the robot includes a protruding mechanism configured to perform an operation on a to-be-handled object; and
when stopping performing the operation at the storage position or the temporary storage shelving unit, the processing module 1102 is specifically configured to:
cancel an operation performed at a current storage position or temporary storage shelving unit, and if the protruding mechanism has stretched into the storage position or the temporary storage shelving unit, control the protruding mechanism to retract or stop.

In an optional implementation, in a case that the robot is taking out the to-be-handled object, when controlling the protruding mechanism to retract, the processing module 1102 is specifically configured to:
control the protruding mechanism to retract if the protruding mechanism fails to drag the to-be-handled object; and/or
take out the to-be-handled object if the protruding mechanism successfully drags the to-be-handled object.

In an optional implementation, in a case that the robot is placing the to-be-handled object, when controlling the protruding mechanism to retract, the processing module 1102 is specifically configured to:
take back the to-be-handled object if the protruding mechanism does not place the to-be-handled object steadily; and/or
control the protruding mechanism to retract if the protruding mechanism has placed the to-be-handled object steadily.

In an optional implementation, the processing module 1102 is specifically configured to:
if it is detected that the user starts to perform an operation at a second storage position on the temporary storage shelving unit when an operation is being performed at a first storage position on a temporary storage shelving unit, stop performing the operation at the temporary storage shelving unit after completing complete the operation at the first storage position.

In an optional implementation, the processing module 1102 is specifically configured to:
when the user is performing an operation at the storage position or the temporary storage shelving unit, perform an operation at another storage position other than the storage position at which the user performs the operation, or perform an operation at another temporary storage shelving unit other than the temporary storage shelving unit at which the user performs the operation.

In an optional implementation, the processing module 1102 is further configured to:
determine a priority of the another storage position or temporary storage shelving unit according to a distance between the another storage position or temporary storage shelving unit and the robot, to perform an operation according to the priority of the another storage position or the another temporary storage shelving unit.

In an optional implementation, the processing module 1102 is specifically configured to:
wait until the operation performed by the user at the storage position or the temporary storage shelving unit is completed and then perform an operation at the storage position or the temporary storage shelving unit.

The apparatus provided in this embodiment may be configured to perform the technical solution in the method embodiment shown in FIG. 8 and FIG. 9. Implementation principles and technical effects thereof are similar. Details are not described herein again.

FIG. 12 is a structural block diagram of a control device according to an embodiment of the present disclosure. As shown in FIG. 12, the control device in this embodiment may include:
at least one processor 1201; and
a memory 1202 communicatively connected to the at least one processor,
the memory 1202 storing instructions executable by the at least one processor 1201, and the instructions being executed by the at least one processor 1201, so that the control device performs the method according to any one of the foregoing embodiments.

Optionally, the memory 1202 may be independent or may be integrated with the processor 1201.

For a specific implementation principle and technical effect of the control device provided in this embodiment, reference may be made to the foregoing embodiments. Details are not described herein again.

FIG. 13 is a structural block diagram of a robot according to an embodiment of the present disclosure. As shown in FIG. 13, the robot in this embodiment may include:
at least one processor 1301; and
a memory 1302 communicatively connected to the at least one processor,
the memory 1302 storing instructions executable by the at least one processor 1301, and the instructions being executed by the at least one processor 1301, so that the robot performs the method according to any one of the foregoing embodiments.

Optionally, the memory 1302 may be independent or may be integrated with the processor 1301.

For an implementation principle and a technical effect of the robot provided in this embodiment, reference may be made to the foregoing embodiments. Details are not described herein again.

In addition, an embodiment of the present disclosure provides a robot control system, including: a temporary storage shelving unit, a robot, and a control device. The temporary storage shelving unit includes at least one storage position configured to place a to-be-handled object. The control device is configured to perform the method corresponding to the embodiment shown in FIG. 1 to FIG. 7. The robot is configured to perform an operation at the temporary storage shelving unit under indication by the control device.

An embodiment of the present disclosure further provides a robot control system, including: a temporary storage shelving unit and a robot. The temporary storage shelving unit includes at least one storage position configured to place a to-be-handled object. The robot is configured to perform the method corresponding to the embodiment shown in FIG. 8 and FIG. 9.

For an implementation principle and a technical effect of the robot control system provided in this embodiment of the present disclosure, reference may be made to the foregoing embodiments. Details are not described herein again.

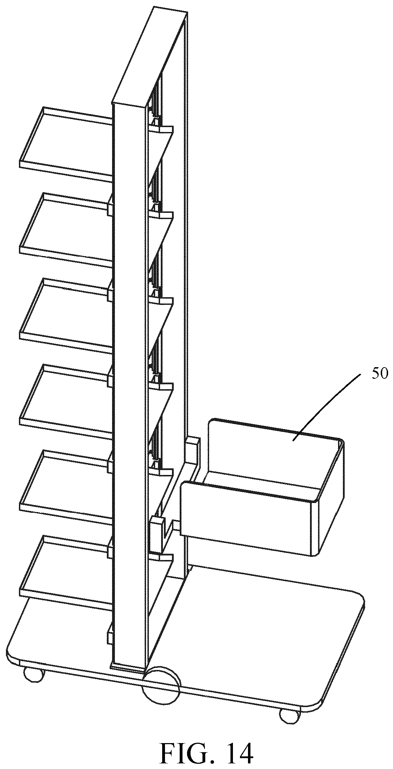

FIG. 14 is a schematic structural diagram of a robot according to an embodiment of the present disclosure. As shown in FIG. 14, the robot may include a protruding mechanism. The protruding mechanism may be, for example, a pallet fork 50. The pallet fork 50 is capable of protruding or retracting, to handle a goods box, for example, taking out a goods box from a storage position or placing a goods box into a storage position.

In addition, the robot may further include another component capable of assisting in the implementation of a goods handling function. Optionally, the robot may include at least one of the following: a walking apparatus, a lifting apparatus, a tray, and the like. The walking apparatus is configured to implement movement of the robot, so that the robot can move back and forth between a warehouse and a temporary storage shelving unit, or move between temporary storage shelving units. The lifting apparatus may drive the protruding mechanism up or down, so that the protruding mechanism reaches an appropriate height. The tray may be configured to place a goods box, so that the robot can move while carrying the goods box, so as to implement a goods box carrying function.

An embodiment of the present disclosure further provides a computer-readable storage medium, the computer-readable storage medium storing computer-executable instructions, and the method according to any one of the foregoing embodiments being implemented when a processor executes the computer-executable instructions.

An embodiment of the present disclosure further provides a computer program product, including a computer program, the method according to any one of the foregoing embodiments being implemented when the computer program is executed.

In the several embodiments provided in the present disclosure, it should be understood that the disclosed device and method may be implemented in other manners. For example, the device embodiments described above are merely exemplary. For example, module division is merely logical function division and may be other division in actual implementation. For example, a plurality of modules may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be electrical, mechanical, or in other forms.

The modules described as separate components may or may not be physically separated, and the components displayed as modules may or may not be physical units, and may be located in one place or may be distributed over a plurality of network units. Some or all of the modules may be selected according to actual needs to implement the solutions of the embodiments.

In addition, functional modules in the embodiments of the present disclosure may be integrated into one processing unit, or the modules may exist alone physically, or two or more modules may be integrated into one unit. The unit into which the modules are integrated may be implemented in a form of hardware, or may be implemented in a form of hardware in combination with a software functional unit.

The integrated module implemented in a form of a software functional module may be stored in a computer-readable storage medium. The software functional module is stored in a storage medium, and includes several instructions for enabling a computer device (which may be a personal computer, a server, a network device, or the like) or a processor to perform some of the steps of the methods described in the embodiments of the present disclosure.

It should be understood that the processor may be a central processing unit (CPU), or may be another general-purpose processor, a digital signal processor (DSP), an application-specific integrated circuit (ASIC), or the like. The general-purpose processor may be a microprocessor, or the processor may be any conventional processor or the like. The steps of the methods disclosed with reference to the present invention may be directly performed and completed by using a hardware processor, or may be performed and completed by using a combination of hardware and software modules in the processor.

The memory may include a high-speed RAM memory, and may also include a non-volatile memory (NVM), for example, at least one disk memory, or may be a USB flash drive, a removable hard disk, a read-only memory, a magnetic disk, an optical disc, or the like.

A bus may be an industry standard architecture (ISA) bus, a peripheral component interconnect (PCI) bus, an extended industry standard architecture (EISA), or the like. The bus may be classified as an address bus, a data bus, a control bus, or the like. For ease of representation, the bus in the accompanying drawings of the present disclosure is not limited to one bus or one type of bus.

The storage medium may be implemented by any type of volatile or non-volatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc. The storage medium may be any available medium accessible to a general-purpose or dedicated computer.

For example, a storage medium is coupled to a processor, so that the processor can read information from the storage medium or write information into the storage medium. Certainly, the storage medium may be alternatively a component of the processor. The processor and the storage medium may be located in an application-specific integrated circuit (ASIC). Certainly, the processor and the storage medium may alternatively exist in an electronic device or a main control device as discrete components.

A person of ordinary skill in the art can understand that all or some of the steps of the method embodiments may be implemented by a program instructing relevant hardware. The program may be stored in a computer-readable storage medium. When the program is executed, the steps of the method embodiments are performed. The foregoing storage medium includes any medium that can store program code, such as a ROM, a RAM, a magnetic disk, or an optical disc.

Finally, it should be noted that the foregoing embodiments are merely used for describing the technical solutions of the present disclosure, but are not intended to limit the present disclosure. Although the present disclosure is described in detail with reference to the foregoing embodiments, a person of ordinary skill in the art should understand that modifications may still be made to the technical solutions described in the foregoing embodiments, or equivalent replacements may be made to some or all of the technical features, within the scope of the technical solutions in the embodiments of the present disclosure.

## Claims

1. A robot control method, executable by a control device, and **characterized by** comprising:
determining (301, 401) a storage position or a temporary storage shelving unit at which a user performs an operation; and
controlling (302) an operation of a robot according to the storage position or the temporary storage shelving unit at which the user performs the operation, so that the robot avoids performing an operation at the same storage position simultaneously with the user;
wherein the determining a storage position or a temporary storage shelving unit at which a user performs an operation comprises: acquiring detection information sent by a detection device, and determining, according to the detection information, the storage position or the temporary storage shelving unit at which the user performs the operation
wherein the determining, according to the detection information, the storage position or the temporary storage shelving unit at which the user performs the operation comprises at least one of:
when it is determined, according to the detection information, that the user appears within a preset range around a temporary storage shelving unit, determining that the user is performing an operation at the temporary storage shelving unit; and
when it is determined, according to the detection information, that an arm of the user stretches into a storage position or a distance between the arm of the user and the storage position is less than a preset value, determining that the user is performing an operation at the storage position
wherein the controlling an operation of a robot according to the storage position or the temporary storage shelving unit at which the user performs the operation comprises: if it is detected that the user starts to perform an operation at the storage position or the temporary storage shelving unit when the robot is performing an operation at the storage position or the temporary storage shelving unit, controlling the robot to stop performing the operation at the storage position or the temporary storage shelving unit

2. The method according to claim 1, wherein the controlling (302) an operation of a robot according to the storage position or the temporary storage shelving unit at which the user performs the operation comprises:
determining (402) a locked storage position or a locked shelving unit according to the storage position or the temporary storage shelving unit at which the user performs the operation; and
controlling (403) the operation of the robot according to the locked storage position or the locked shelving unit;
wherein the locked shelving unit comprises the temporary storage shelving unit at which the user performs the operation; and
the locked storage position comprises the storage position at which the user performs the operation, or the locked storage position comprises the storage position at which the user performs the operation and a storage position within a preset range around the storage position at which the user performs the operation.

3. The method according to claim 1 or 2, wherein
the detection device comprises at least one of the following: a pressure sensor, a laser radar sensor, an infrared sensor, a visual acquisition device, and a grating sensor.

4. The method according to claim 3, wherein the robot comprises a protruding mechanism configured to perform an operation on a to-be-handled object; and
the controlling the robot to stop performing the operation at the storage position or the temporary storage shelving unit comprises:
canceling an operation performed by the robot at a current storage position or temporary storage shelving unit, and if the protruding mechanism has stretched into the storage position or the temporary storage shelving unit, controlling the protruding mechanism to retract or stop.

5. The method according to claim 4, wherein in a case that the robot is taking out the to-be-handled object, the controlling the protruding mechanism to retract comprises at least one of:
controlling the protruding mechanism to retract if the protruding mechanism fails to drag the to-be-handled object; and
controlling the protruding mechanism to take out the to-be-handled object if the protruding mechanism successfully drags the to-be-handled object.
wherein in a case that the robot is placing the to-be-handled object, the controlling the protruding mechanism to retract comprises at least one of:
controlling the robot to take back the to-be-handled object if the protruding mechanism does not place the to-be-handled object steadily; and
controlling the protruding mechanism to retract if the protruding mechanism has placed the to-be-handled object steadily.

6. The method according to any one of claims 1 to 5, wherein the controlling an operation of a robot according to the storage position or the temporary storage shelving unit at which the user performs the operation comprises:
when the robot is performing an operation at a first storage position on the temporary storage shelving unit, if it is detected that the user starts to perform an operation at a second storage position on the temporary storage shelving unit, controlling the robot to stop performing the operation at the temporary storage shelving unit after completing the operation at the first storage position;
when the user is performing an operation at the storage position or the temporary storage shelving unit, controlling the robot to perform an operation at another storage position other than the storage position at which the user performs the operation, or controlling the robot to perform an operation at another temporary storage shelving unit other than the temporary storage shelving unit at which the user performs the operation; or
controlling the robot to wait until the operation performed by the user at the storage position or the temporary storage shelving unit is completed and then perform an operation at the storage position or the temporary storage shelving unit.

7. The method according to claim 6, further comprising:
determining a priority of the another storage position or the another temporary storage shelving unit according to a distance between the another storage position or temporary storage shelving unit and the robot, to control the robot to perform an operation according to the priority of the another storage position or the another temporary storage shelving unit.

8. The method according to any one of claims 1 to 7, wherein the storage position is configured to place a to-be-handled object, and the temporary storage shelving unit comprises a plurality of storage positions;
one side of the temporary storage shelving unit is used for the user to perform an operation, and the other side is used for the robot to perform an operation;
a protection apparatus configured to prevent the robot from contacting with the user is arranged on the side of the temporary storage shelving unit, which is used for the user to perform an operation.

9. A control device, comprising:
at least one processor (1201); and
a memory (1202) communicatively connected to the at least one processor,
the memory storing instructions executable by the at least one processor, and the instructions, when being executed by the at least one processor, are configured to perform the method according to any one of claims 1 to 8.

10. A robot control system, comprising: a temporary storage shelving unit, a robot, and a control device;
the temporary storage shelving unit comprising at least one storage position configured to place a to-be-handled object;
the control device being configured to perform the method according to any one of claims 1 to 8; and
the robot being configured to perform an operation at the temporary storage shelving unit under indication by the control device.

11. A computer-readable storage medium storing computer-executable instructions, the computer-executable instructions, when being executed by a processor, are configured to perform the method according to any one of claims 1 to 8.

## Patentansprüche

1. Robotersteuerungsverfahren, das durch eine Steuervorrichtung ausführbar ist, **gekennzeichnet durch**:
Bestimmen (301, 401) einer Lagerposition oder eines Zwischenlagergestells, an dem ein Benutzer eine Operation durchführt; und
Steuern (302) einer Operation eines Roboters gemäß der Lagerposition oder des Zwischenlagergestells, an dem der Benutzer die Operation durchführt, so dass der Roboter vermeidet, gleichzeitig mit dem Benutzer eine Operation an derselben Lagerposition durchzuführen;
wobei das Bestimmen einer Lagerposition oder eines Zwischenlagergestells, an dem ein Benutzer eine Operation durchführt, umfasst: Erfassen von Detektionsinformationen, die von einer Detektionsvorrichtung gesendet werden, und Bestimmen der Lagerposition oder des Zwischenlagergestells, an dem der Benutzer die Operation durchführt, gemäß den Detektionsinformationen;
wobei das Bestimmen der Lagerposition oder des Zwischenlagergestells, an dem der Benutzer die Operation durchführt, gemäß den Detektionsinformationen mindestens eines der folgenden umfasst:
wenn gemäß den Detektionsinformationen bestimmt wird, dass der Benutzer innerhalb eines vorgegebenen Bereichs um ein Zwischenlagergestell erscheint, Bestimmen, dass der Benutzer eine Operation an dem Zwischenlagergestell durchführt; und
wenn gemäß den Detektionsinformationen bestimmt wird, dass ein Arm des Benutzers sich in eine Lagerposition streckt oder ein Abstand zwischen dem Arm des Benutzers und der Lagerposition kleiner als ein vorgegebener Wert ist, Bestimmen, dass der Benutzer eine Operation an der Lagerposition durchführt;
wobei das Steuern einer Operation eines Roboters gemäß der Lagerposition oder dem Zwischenlagergestell, an dem der Benutzer die Operation durchführt, umfasst: wenn erfasst wird, dass der Benutzer beginnt, eine Operation an der Lagerposition oder dem Zwischenlagergestell durchzuführen, während der Roboter eine Operation an der Lagerposition oder dem Zwischenlagergestell durchführt, Steuern des Roboters, Durchführen der Operation an der Lagerposition oder dem Zwischenlagergestell anzuhalten.

2. Verfahren nach Anspruch 1, wobei das Steuern (302) einer Operation eines Roboters gemäß der Lagerposition oder dem Zwischenlagergestell, an dem der Benutzer die Operation durchführt, umfasst:
Bestimmen (402) einer gesperrten Lagerposition oder eines gesperrten Lagergestells gemäß der Lagerposition oder dem Zwischenlagergestell, an dem der Benutzer die Operation durchführt; und
Steuern (403) der Operation des Roboters gemäß der gesperrten Lagerposition oder dem gesperrten Lagergestell;
wobei das gesperrte Lagergestell das Zwischenlagergestell umfasst, an dem der Benutzer die Operation durchführt; und
die gesperrte Lagerposition die Lagerposition umfasst, an der der Benutzer die Operation durchführt, oder die gesperrte Lagerposition die Lagerposition, an der der Benutzer die Operation durchführt, und eine Lagerposition innerhalb eines vorgegebenen Bereichs um die Lagerposition, an der der Benutzer die Operation durchführt, umfasst.

3. Verfahren nach Anspruch 1 oder 2, wobei
die Detektionsvorrichtung mindestens eines der folgenden umfasst: einen Drucksensor, einen Laserradarsensor, einen Infrarotsensor, eine visuelle Erfassungsvorrichtung und einen Gittersensor.

4. Verfahren nach Anspruch 3, wobei der Roboter einen vorstehenden Mechanismus umfasst, der konfiguriert ist, eine Operation an einem zu handhabenden Objekt durchzuführen; und
das Steuern des Roboters, Durchführen der Operation an der Lagerposition oder dem Zwischenlagergestell anzuhalten, umfasst:
Abbrechen einer vom Roboter an einer aktuellen Lagerposition oder Zwischenlagergestell durchgeführten Operation, und wenn der vorstehende Mechanismus in die Lagerposition oder das Zwischenlagergestell gestreckt ist, Steuern des vorstehenden Mechanismus zum Zurückziehen oder Anhalten.

5. Verfahren nach Anspruch 4, wobei in einem Fall, in dem der Roboter das zu handhabende Objekt entnimmt, das Steuern des vorstehenden Mechanismus zum Zurückziehen mindestens eines der folgenden umfasst:
Steuern des vorstehenden Mechanismus zum Zurückziehen, wenn es dem vorstehenden Mechanismus nicht gelingt, das zu handhabende Objekt zu ziehen; und
Steuern des vorstehenden Mechanismus, das zu handhabende Objekt zu entnehmen, wenn es dem vorstehenden Mechanismus gelingt, das zu handhabende Objekt zu ziehen;
wobei in einem Fall, in dem der Roboter das zu handhabende Objekt ablegt, das Steuern des vorstehenden Mechanismus zum Zurückziehen mindestens eines der folgenden umfasst:
Steuern des Roboters, das zu handhabende Objekt zurückzunehmen, wenn der vorstehende Mechanismus das zu handhabende Objekt nicht sicher abgelegt hat; und
Steuern des vorstehenden Mechanismus zum Einfahren, wenn der Vorstehenden Mechanismus das zu handhabende Objekt sicher abgelegt hat.

6. Verfahren nach einem der Ansprüche 1 bis 5, wobei das Steuern eine Operation eines Roboters gemäß der Lagerposition oder dem Zwischenlagergestell, an dem der Benutzer die Operation durchführt, umfasst:
wenn der Roboter eine Operation an einer ersten Lagerposition auf dem Zwischenlagergestell durchführt, und wenn erfasst wird, dass der Benutzer beginnt, eine Operation an einer zweiten Lagerposition auf dem Zwischenlagergestell durchzuführen, Steuern des Roboters, Durchführen der Operation an dem Zwischenlagergestell nach Abschluss der Operation an der ersten Lagerposition anzuhalten;
wenn der Benutzer eine Operation an der Lagerposition oder dem Zwischenlagergestell durchführt, Steuern des Roboters, eine Operation an einer anderen Lagerposition als der Lagerposition, an der der Benutzer die Operation durchführt, durchzuführen, oder Steuern des Roboters, eine Operation an anderem Zwischenlagergestell als dem Zwischenlagergestell, an dem der Benutzer die Operation durchführt, durchzuführen; oder
Steuern des Roboters zu warten, bis die vom Benutzer an der Lagerposition oder dem Zwischenlagergestell durchgeführte Operation abgeschlossen ist, und dann eine Operation an der Lagerposition oder dem Zwischenlagergestell durchzuführen.

7. Verfahren nach Anspruch 6, ferner umfassend:
Bestimmen einer Priorität der anderen Lagerposition oder des anderen Zwischenlagergestells gemäß einem Abstand zwischen der anderen Lagerposition oder Zwischenlagergestell und dem Roboter, um den Roboter zu steuern, eine Operation gemäß der Priorität der anderen Lagerposition oder des anderen Zwischenlagergestells durchzuführen.

8. Verfahren nach einem der Ansprüche 1 bis 7, wobei die Lagerposition konfiguriert ist, ein zu handhabendes Objekt abzulegen, und das Zwischenlagergestell mehrere Lagerpositionen umfasst;
eine Seite des Zwischenlagergestells für den Benutzer zum Durchführen einer Operation vorgesehen ist und die andere Seite für den Roboter zum Durchführen einer Operation vorgesehen ist;
auf der Seite des Zwischenlagergestells, das für den Benutzer zum Durchführen einer Operation vorgesehen ist, eine Schutzvorrichtung angeordnet ist, die konfiguriert ist, einen Kontakt des Roboters mit dem Benutzer zu verhindern.

9. Steuervorrichtung, umfassend:
mindestens einen Prozessor (1201); und
einen Speicher (1202), der mit dem mindestens einen Prozessor kommunikativ verbunden ist,
wobei der Speicher vom mindestens einen Prozessor ausführbare Anweisungen speichert, und die Anweisungen, wenn sie vom mindestens einen Prozessor ausgeführt werden, konfiguriert sind, das Verfahren nach einem der Ansprüche 1 bis 8 durchzuführen.

10. Robotersteuerungssystem, umfassend: ein Zwischenlagergestell, einen Roboter und eine Steuervorrichtung;
das Zwischenlagergestell mindestens eine Lagerposition umfasst, die konfiguriert ist, ein zu handhabendes Objekt abzulegen;
die Steuervorrichtung konfiguriert ist, das Verfahren nach einem der Ansprüche 1 bis 8 durchzuführen; und
der Roboter konfiguriert ist, eine Operation an dem Zwischenlagergestell unter Hinweis durch die Steuervorrichtung durchzuführen.

11. Computerlesbares Speichermedium, das computerausführbare Anweisungen speichert, wobei die computerausführbaren Anweisungen, wenn sie von einem Prozessor ausgeführt werden, konfiguriert sind, das Verfahren nach einem der Ansprüche 1 bis 8 durchzuführen.

## Revendications

1. Procédé de commande de robot, exécutable par un dispositif de commande et **caractérisé en ce qu'**il comprend :
déterminer (301, 401) une position de stockage ou une unité d'étagère de stockage temporaire à laquelle un utilisateur effectue une opération ; et
commander (302) une opération d'un robot en fonction de la position de stockage ou de l'unité d'étagère de stockage temporaire à laquelle l'utilisateur effectue l'opération, de sorte que le robot évite d'effectuer une opération simultanément à la même position de stockage que l'utilisateur ;
dans lequel la détermination d'une position de stockage ou d'une unité d'étagère de stockage temporaire à laquelle un utilisateur effectue une opération comprend : acquérir une information de détection émise par un dispositif de détection, et déterminer, en fonction de l'information de détection, la position de stockage ou de l'unité d'étagère de stockage temporaire à laquelle l'utilisateur effectue l'opération,
dans lequel la détermination, en fonction de l'information de détection, la position de stockage ou de l'unité d'étagère de stockage temporaire à laquelle l'utilisateur effectue l'opération comprend au moins :
lorsqu'il est déterminé, en fonction de l'information de détection, que l'utilisateur se trouve dans une plage prédéfinie autour d'une unité d'étagère de stockage temporaire, déterminer que l'utilisateur effectue une opération à l'unité d'étagère de stockage temporaire ; et
lorsqu'il est déterminé, en fonction de l'information de détection, qu'un bras de l'utilisateur s'étend jusqu'à une position de stockage ou qu'une distance entre le bras de l'utilisateur et la position de stockage est inférieure à une valeur prédéfinie, déterminer que l'utilisateur effectue une opération à la position de stockage,
dans lequel la commande d'une opération d'un robot en fonction de la position de stockage ou de l'unité d'étagère de stockage temporaire à laquelle l'utilisateur effectue l'opération comprend : s'il est détecté que l'utilisateur commence à effectuer une opération à la position de stockage ou à l'unité d'étagère de stockage temporaire lorsque le robot effectue une opération à la position de stockage ou à l'unité d'étagère de stockage temporaire, commander le robot à arrêter d'effectuer l'opération à la position de stockage ou à l'unité d'étagère de stockage temporaire.

2. Procédé selon la revendication 1, dans lequel la commande (302) d'une opération d'un robot en fonction de la position de stockage ou de l'unité d'étagère de stockage temporaire à laquelle l'utilisateur effectue l'opération comprend :
déterminer (402) une position de stockage verrouillée ou une unité d'étagère verrouillée en fonction de la position de stockage ou de l'unité d'étagère de stockage temporaire à laquelle l'utilisateur effectue l'opération ; et
commander (403) l'opération du robot en fonction de la position de stockage verrouillée ou de l'unité d'étagère verrouillée ;
dans lequel l'unité d'étagère verrouillée comprend l'unité d'étagère de stockage temporaire à laquelle l'utilisateur effectue l'opération ; et
la position de stockage verrouillée comprend la position de stockage à laquelle l'utilisateur effectue l'opération, ou la position de stockage verrouillée comprend la position de stockage à laquelle l'utilisateur effectue l'opération et une position de stockage dans une plage prédéfinie autour de la position de stockage à laquelle l'utilisateur effectue l'opération.

3. Procédé selon la revendication 1 ou 2, dans lequel,
le dispositif de détection comprend au moins l'un des suivants : un capteur de pression, un capteur à radar laser, un capteur infrarouge, un dispositif d'acquisition visuelle et un capteur à réseau.

4. Procédé selon la revendication 3, dans lequel le robot comprend un mécanisme saillant configuré pour effectuer une opération sur un objet à manipuler ; et
la commande du robot pour arrêter d'effectuer l'opération à la position de stockage ou à l'unité d'étagère de stockage temporaire comprend :
annuler une opération effectuée par le robot à une position de stockage actuelle ou à l'unité d'étagère de stockage temporaire, et si le mécanisme saillant s'est étendu jusqu'à la position de stockage ou à l'unité d'étagère de stockage temporaire, commander le mécanisme saillant à se rétracter ou s'arrêter.

5. Procédé selon la revendication 4, dans lequel, dans le cas où le robot retire l'objet à manipuler, la commande du mécanisme saillant pour se rétracter comprend au moins l'un des suivants :
commander le mécanisme saillant à se rétracter si le mécanisme saillant échoue à traîner l'objet à manipuler ; et
commander le mécanisme saillant à retirer l'objet à manipuler si le mécanisme saillant réussit à traîner l'objet à manipuler,
dans lequel dans le cas où le robot place l'objet à manipuler, la commande du mécanisme saillant pour se rétracter comprend au moins l'un des suivants :
commander le robot à reprendre l'objet à manipuler si le mécanisme saillant ne place pas l'objet à manipuler de manière stable ; et
commander le mécanisme saillant à se rétracter si le mécanisme saillant a placé l'objet à manipuler de manière stable.

6. Procédé selon l'une quelconque des revendications 1 à 5, dans lequel la commande d'une opération d'un robot en fonction de la position de stockage ou de l'unité d'étagère de stockage temporaire à laquelle l'utilisateur effectue l'opération comprend :
lorsque le robot effectue une opération à une première position de stockage sur l'unité d'étagère de stockage temporaire, s'il est détecté que l'utilisateur commence à effectuer une opération à une seconde position de stockage sur l'unité d'étagère de stockage temporaire, commander le robot à arrêter d'effectuer l'opération à l'unité d'étagère de stockage temporaire après avoir complété l'opération à la première position de stockage ;
lorsque l'utilisateur effectue une opération à la position de stockage ou à l'unité d'étagère de stockage temporaire, commander le robot à effectuer une opération à une autre position de stockage que la position de stockage à laquelle l'utilisateur effectue l'opération, ou commander le robot à effectuer une opération à une autre unité d'étagère de stockage temporaire que l'unité d'étagère de stockage temporaire à laquelle l'utilisateur effectue l'opération ; ou
commander le robot à attendre jusqu'à ce que l'opération effectuée par l'utilisateur à la position de stockage ou à l'unité d'étagère de stockage temporaire soit complété, puis à effectuer une opération à la position de stockage ou à l'unité d'étagère de stockage temporaire.

7. Procédé selon la revendication 6, comprenant en outre :
déterminer une priorité de l'autre position de stockage ou de l'autre unité d'étagère de stockage temporaire en fonction d'une distance entre l'autre position de stockage ou l'unité d'étagère de stockage temporaire et le robot, afin de commander le robot à effectuer une opération en fonction de la priorité de l'autre position de stockage ou de l'autre unité d'étagère de stockage temporaire.

8. Procédé selon l'une quelconque des revendications 1 à 7, dans lequel la position de stockage est configurée pour placer un objet à manipuler, et l'unité d'étagère de stockage temporaire comprend une pluralité de positions de stockage ;
un côté de l'unité d'étagère de stockage temporaire est utilisé pour permettre à l'utilisateur d'effectuer une opération, et l'autre côté est utilisé pour permettre au robot d'effectuer une opération ;
un dispositif de protection configuré pour empêcher le robot d'entrer en contact avec l'utilisateur est disposé sur le côté de l'unité d'étagère de stockage temporaire qui est utilisé pour permettre à l'utilisateur d'effectuer une opération.

9. Dispositif de commande, comprenant :
au moins un processeur (1201) ; et
une mémoire (1202) connectée par communication à l'au moins un processeur,
la mémoire stockant des instructions exécutables par l'au moins un processeur, et les instructions, lorsqu'elles sont exécutées par l'au moins un processeur, étant configurées pour mette en œuvre le procédé selon l'une quelconque des revendications 1 à 8.

10. Système de commande de robot, comprenant : une unité d'étagère de stockage temporaire, un robot et un dispositif de commande ;
l'unité d'étagère de stockage temporaire comprenant au moins une position de stockage configurée pour placer un objet à manipuler ;
le dispositif de commande étant configuré pour mette en œuvre le procédé selon l'une quelconque des revendications 1 à 8 ; et
le robot étant configuré pour effectuer une opération à l'unité d'étagère de stockage temporaire sous une indication du dispositif de commande.

11. Support de stockage lisible par ordinateur, stockant des instructions exécutables par ordinateur, les instructions exécutables par ordinateur, lorsqu'elles sont exécutées par un processeur, sont configurées pour mette en œuvre le procédé selon l'une quelconque des revendications 1 à 8.
